# EUROPEAN PATENT SPECIFICATION

(11) **EP 4 406 690 B1**
(45) Date of publication and mention of the grant of the patent: **17.12.2025**
(21) Application number: 23730695.6
(22) Date of filing: 29.03.2023
(51) Int. Cl.: B23K 26/21, B23K 26/14, B23K 26/70

(54) **WELDING DEVICE**
SCHWEISSVORRICHTUNG
DISPOSITIF DE SOUDAGE

(30) Priority: 17.10.2022 CN 202222723111 U
(43) Date of publication of application: 31.07.2024
(73) Proprietor: Contemporary Amperex Technology (Hong Kong) Limited, Central, Central And Western District (HK)
(72) Inventor: HUANG, Chaoqun, Ningde, Fujian 352100 (CN); SONG, Lei, Ningde, Fujian 352100 (CN); ZHONG, Guangcheng, Ningde, Fujian 352100 (CN); LI, Hongtao, Ningde, Fujian 352100 (CN); LAI, Zhonglin, Ningde, Fujian 352100 (CN); CHEN, Shengdong, Ningde, Fujian 352100 (CN)
(74) Representative: Rowlands, Stuart Michael
(86) International application number: PCT/CN2023/084586
(87) International publication number: WO 2024/082554

(56) References cited:
- EP-A1- 0 216 728
- CN-A- 105 397 318
- CN-A- 105 414 780
- CN-A- 114 024 190
- CN-U- 210 334 798
- CN-U- 210 548 843
- CN-U- 212 311 178
- CN-U- 213 827 598
- CN-U- 216 177 570
- CN-U- 218 396 445
- FR-A1- 2 671 503
- KR-B1- 102 228 075
- US-A- 5 408 065

## Description

The present invention relates to the technical field of welding, and in particular, to a welding device, see claim 1.

### Background

In the field of battery production, top cover welding is one of the important processes, and its principle is to weld the top cover and case by laser. However, during the welding process, at least some structures in the welding device will be heated and deformed, which affects the reliability of laser welding.

CN 212 311 178 U (describing the preamble of claim 1) shows a laser cutting head comprises a laser cutting head body, a spiral cooling pipe is arranged on the outer wall of the laser cutting head body.

US 5 408 065 A discloses a laser welding apparatus comprises a mount attached to a laser beam delivery system and a cylinder attached to the mount.

CN 213 827 598 U discloses a special cooling device for a laser cutting head, a cooling pipe is coiled on the outer wall of the laser cutting head, circulating cooling liquid is introduced into the cooling pipe.

### Summary of the Invention

In view of the above problems, the present invention provides a welding device that can improve the welding effect.

According to a first aspect of the present invention, a welding device is defined in claim 1, which comprises a laser welding head and a cooling mechanism, wherein the laser welding head is provided with a channel for laser to pass through, and the cooling device is arranged on a side wall of the laser welding head and used for cooling the laser welding head.

In the above solution, the cooling mechanism is arranged on a side wall of the laser welding head, and the cooling mechanism can cool the laser welding head in the process of welding using the laser welding head, which reduces the risk of high-temperature deformation of the laser welding head due to too high temperature, improves the laser welding effect and prolongs the service life of the welding device.

The laser welding head comprises a nozzle and a connecting pipe connected to the nozzle, and the cooling mechanism is sleeved on the outer periphery of the connecting pipe.

The laser welding head comprises a nozzle and a connecting pipe connected to the nozzle, and the cooling mechanism is sleeved on the outer periphery of the connecting pipe.

Thus, the cooling mechanism is sleeved on the outer periphery of the connecting pipe, which can improve the reliability of the relative position between the laser welding head and the cooling mechanism and reduce the risk of separation of the cooling mechanism from the laser welding head. Moreover, compared with arranging the cooling mechanism on the nozzle, this design can also increase the size of the cooling mechanism to a certain extent, thus improving the cooling effect on the laser welding head.

The connecting pipe comprises an outer wall surface and a accommodating groove formed by the outer wall surface recessed inwards, and at least part of the cooling mechanism is located in the accommodating groove.

Thus the connecting pipe is provided with an accommodating groove, and at least part of the cooling mechanism is arranged in the accommodating groove. Compared with other ways, the design of the accommodating groove can play a role in fixing the cooling mechanism and the laser welding head to a certain extent to reduce the risk of relative displacement between them.

The welding device further comprises a limiting assembly arranged at a side of the cooling mechanism away from the accommodating groove, and the limiting assembly is connected to the connecting pipe.

Thus the position of the cooling mechanism is limited by arranging the limiting assembly, which reduces the risk of separation of the cooling mechanism from the laser welding head to ensure that the cooling mechanism can always cool the laser welding head, and improve the reliability of the whole structure.

According to the present invention, there are a plurality of limiting assemblies, and the plurality of limiting assemblies are arranged at intervals along the circumferential direction of the connecting pipe.

Thus, by arranging a plurality of limiting assemblies, the limiting effect of the limiting assemblies on the cooling mechanism can be improved, thereby further reducing the risk of separation of the cooling mechanism from the connecting pipe and improving the reliability.

In some embodiments, the limiting assembly and the accommodating groove clamp the cooling mechanism.

In the above solution, the limiting assembly and the accommodating groove clamp the cooling mechanism, thereby reducing the risk of unnecessary shaking of the cooling mechanism and improving the reliability of the relative position between the cooling mechanism and the laser welding head during the use of the welding device.

In some embodiments, at least part of the cooling mechanism protrudes from the accommodating groove, and the at least part of the cooling mechanism protruding from the accommodating groove abuts against the limiting assembly.

In the above solution, at least part of the cooling mechanism protrudes from the accommodating groove, so that the cooling mechanism can have a larger size, thereby achieving a better cooling effect on the laser welding head. On this basis, the existence of the limiting assembly can prevent the cooling mechanism from separating from the laser welding head while ensuring that the cooling mechanism will not shake relatively during the use of the welding device, thus improving the welding effect.

In some embodiments, the connecting pipe and the nozzle are made of thermally conductive materials.

In the above solution, the connecting pipe and the nozzle are made of thermally conductive materials, and the cooling effect of the cooling mechanism on the connecting pipe can be conducted to the nozzle, so that the nozzle can be cooled at the same time, the temperature of the nozzle can be reduced, the risk of deformation of the nozzle due to too high temperature can be reduced, and the use reliability of the welding device can be improved.

In some embodiments, the thermal conductivity of the thermally conductive material is A, wherein A ≥ 200 W/m•K.

In the above solution, the thermal conductivity A of the thermally conductive material is set to be not less than 200 W/m•K, so that the cooling effect of the cooling mechanism can be transmitted to the nozzle in time, so as to realize the timely cooling of the nozzle and improve the cooling effect of the cooling mechanism on the nozzle. Moreover, if the thermal conductivity is too high, the temperature of the nozzle and the connecting pipe will easily increase sharply during the working process of the welding device, which is not conducive to the long-term use of the welding device. Therefore, the embodiment of the present application also sets the thermal conductivity A of the thermally conductive material to be not more than 500 W/m•K, so as to ensure the long-term use of the welding device.

In some embodiments, the thermally conductive material comprises at least one of copper and aluminum.

In the above solution, both copper and aluminum are metal materials with strong heat conduction effect. By setting the connecting pipe and the nozzle to comprise at least one of copper and aluminum, it can ensure that the cooling effect of the cooling mechanism can be transmitted to the nozzle in time, so as to realize the timely cooling of the nozzle. Moreover, compared with other materials, copper and aluminum are more common and cheaper, so the cost of the welding device can be reduced to a certain extent, which is conductive to large-scale production and use.

In some embodiments, the cooling mechanism comprises a cooling pipe for transporting a cooling medium.

In the above solution, by arranging the cooling pipe spirally wound outside the laser welding head and conveying the cooling medium into the cooling pipe, part of the heat of the laser welding head can be taken away, so as to realize the cooling effect. This structure is simple and reliable, which is conductive to production and manufacturing.

In some embodiments, there are a plurality of cooling pipes, which are arranged side by side in the extending direction of the connecting pipe.

In the above solution, compared with the solution with only one cooling tube, the arrangement of a plurality of cooling pipes can reduce the extension length of a single cooling tube, that is, reduce the moving path of the cooling medium, thus improving the cooling effect of the cooling medium on the laser welding head.

In some embodiments, the cooling pipe is fitted to and spirally wound around the connecting pipe.

In the above solution, the cooling pipe is fitted to and spirally wound around the connecting pipe, which means that the shape and size of the annular structure formed by the winding of the cooling pipe are matched with the shape and size of the outer peripheral side wall of the laser welding head. In this way, physical contact between the cooling pipe and the laser welding head can be realized, and the cooling effect of the cooling mechanism on the laser welding head can be improved through physical contact, thus further reducing the risk of deformation of the laser welding head due to high temperature.

In some embodiments, the welding device further comprises a bonding member, and the bonding member is sandwiched between the cooling pipe and the connecting pipe to fix the cooling pipe and the connecting pipe.

In the above solution, a bonding member is sandwiched between the cooling pipe and the connecting pipe, and the bonding member can bond and fix the cooling pipe and the connecting pipe. The existence of the bonding member can improve the connection reliability between the cooling pipe and the connecting pipe, thereby reducing the risk of relative displacement between them and improving the reliability of the welding device.

In some embodiments, the bonding member comprises a thermally conductive adhesive.

In the above solution, the bonding member can not only improve the position reliability between the cooling pipe and the connecting pipe, but also conduct heat, thus helping the cooling mechanism to better cool the laser welding head and improving the cooling effect.

In the above solution, the cooling device can be sandwiched between a gas generating device and a battery, and the cooling device is used for cooling the gas generated by the gas generating device, so that the gas can better cool the battery, thereby further reducing the risk of thermal runaway and open flame of the battery.

The above description is only an overview of the technical solutions of the present application. In order to understand the technical means of the present application more clearly, it can be implemented according to the contents of the specification, and in order to make the above and other objectives, features and advantages of the present application more obvious and understandable, specific embodiments of the present application are enumerated below.

### Description of Drawings

In order to explain the technical solutions of the embodiments of the present invention more clearly, the drawings that need to be used in the embodiments of the present invention will be briefly introduced below. It will be apparent that the drawings described below are only some embodiments of the present invention, based on which other drawings can be obtained by those of ordinary skill in the art without creative work.
Fig. 1 is a schematic structural diagram of a welding device provided by an embodiment of the present invention;
Fig. 2 is an exploded schematic structural diagram of a laser welding head in a welding device provided by an embodiment of the present invention;
Fig. 3 is a schematic structural diagram of a cooling mechanism in a welding device provided by an embodiment of the present invention.

In the drawings:
10. Laser welding head; 11. Nozzle; 12. Connecting pipe;
20. Cooling mechanism; 21. Cooling pipe;
30. Limiting assembly;
T. Channel; M. Outer wall surface; A. Accommodating groove.

### Detailed Description

Hereinafter, the embodiments of the technical solutions of the present invention will be described in detail with the drawings. The following embodiments are only used to explain the technical solutions of the present invention more clearly, so they are only used as examples and cannot be used to limit the protection scope of the present invention, which is defined in the appended claims.

Unless otherwise defined, all technical and scientific terms used herein have the same meaning as commonly understood by those skilled in the art to which the present application pertains. The terms used herein are only for the purpose of describing specific embodiments and are not intended to limit the present application. The terms "including" and "having" in the specification and claims of the present application and the above description of drawings, as well as any variations thereof, are intended to cover non-exclusive inclusion.

In the description of the embodiments of the present invention, the technical terms "first" and "second" or the like are only used to distinguish different objects, and cannot be understood as indicating or implying relative importance or implicitly indicating the number, specific order or primary-secondary relationship of the indicated technical features. In the description of the embodiments of the present application, the meaning of "a plurality of" is more than two, unless otherwise specifically defined.

Reference to "an embodiment" herein means that a particular feature, structure, or characteristic described in connection with an embodiment can be comprised in at least one embodiment of the present invention. The appearance of this phrase in various places in the specification does not necessarily refer to the same embodiment, nor is it an independent or alternative embodiment mutually exclusive with other embodiments. It is understood explicitly and implicitly by those skilled in the art that the embodiments described herein can be combined with other embodiments.

In the description of the embodiments of the present invention, the term "and/or" is only an association relationship that describes the associated objects, which means that there can be three kinds of relationships. For example, A and/or B can refer to the three situations that A exists alone, A and B exist at the same time, and B exists alone. In addition, the character "/" herein generally indicates that the associated objects are in an "or" relationship.

In the description of the embodiments of the present invention, the term "a plurality of" refers to more than two (including two), similarly, "a plurality of groups" refers to more than two groups (including two groups), and "a plurality of sheets" refers to more than two sheets (including two sheets).

In the description of the embodiments of the present invention, the technical terms "central", "longitudinal", "horizontal", "length", "width", "thickness", "upper", "lower", "front", "behind", "left", "right", "vertical", "transverse", "top", "bottom", "inside", "outside", "clockwise", "counterclockwise", "axial", "radial", "circumferential" and the like indicate orientation or position relationships based on the orientations or positions shown in the drawings. They are only for the convenience of describing the embodiments of the present invention and simplifying the description, rather than indicating or implying that the referred device or element must have a specific orientation, be constructed and operated in a specific orientation, so they cannot be understood as limiting the embodiments of the present invention.

In the description of the embodiments of the present invention, unless otherwise specified and defined, technical terms such as "installing", "linking", "connecting" and "fixing" should be broadly understood. For example, it can be a fixed connection, a detachable connection or an integrated connection; it can also be a mechanical connection or an electrical connection; it can be a direct connection, can also be an indirect connection through an intermediary, and can be an internal communication of two elements or the interaction between two elements. For those skilled in the art, the specific meanings of the above terms in the embodiments of the present invention can be understood according to the specific situation.

In the prior art, the top cover and the case of the battery are welded by laser welding, and the inventors noticed that the laser welding head in the welding device is prone to high-temperature deformation during the welding process, thus reducing the effect of laser welding.

The inventors found that this is because the laser welding head needs to be tilted at a certain angle during the welding process to prevent the laser from being reflected by the workpiece and returning along the optical path to damage the laser welding head. However, as the laser welding head is tilted at a certain angle, the laser is still emitted to the laser welding head through reflection, which will increase the temperature of the laser welding head. In addition, the laser welding head is affected by the thermal radiation of laser welding, which will also make its temperature increase sharply. Under the condition of long-term high temperature, the laser welding head is prone to oxidation and ablation, which leads to the roughness and deformation of the surface of the laser welding head, affects the protective effect of the welding shielding gas, and then affects the laser welding effect, resulting in defects such as bumpy spots and wavy lines on the weld surface, and decreased welding yield.

In addition, with the continuous development of the battery industry, the welding rate of the top cover is constantly increased, which means that more and more welding heat will be accumulated on the laser welding head, which accelerates the burning deformation of the laser welding head and seriously affects the laser welding yield.

Based on the above technical problems, the present application provides a welding device, where the laser welding head can be cooled to reduce the risk of high-temperature deformation of the laser welding head.

It should be noted that the welding device provided in the present application can be used for welding battery cases and end covers, and can also be used for welding operations in other fields, which is not limited in the present application.

The structure of the welding device will be described in detail in conjunction with the drawings.

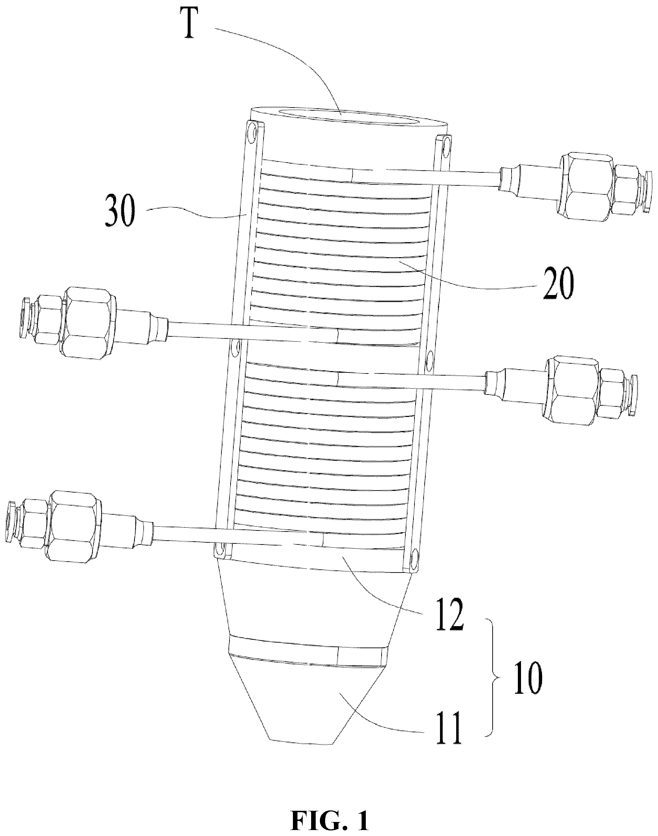

Figure 1 describes a welding device, which comprises a laser welding head 10 and a cooling mechanism 20. The laser welding head 10 is provided with a channel T for laser to pass through, and the cooling device is arranged on a side wall of the laser welding head 10 and used for cooling the laser welding head 10.

As a part of the welding device, the laser welding head 10 is mainly used to guide the laser to be ejected from the welding device. The laser welding head 10 has a hollow structure, a channel T is arranged inside it, the channel T is communicated with the external environment, and the laser can exit the laser welding head 10 through the channel T.

The laser welding head 10 can be of various shapes and sizes. Specifically, the shape of the laser welding head 10 can be determined according to the size and shape of the internal channel T. Moreover, the laser welding head 10 can be made of a variety of materials, such as copper, stainless steel, and aluminum alloy, which is not particularly limited in the embodiments of the present application.

The cooling mechanism 20 is arranged on the side wall of the laser welding head 10, and the cooling mechanism 20 can be arranged on the inner side wall of the laser welding head 10 or on the outer side wall of the laser welding head 10, which is not limited in the embodiments of the present application. Moreover, the cooling mechanism 20 can be connected and fixed to the side wall by welding or bonding, or the cooling mechanism 20 can abut against and be in contact with the side wall only by sleeving, etc., which is not limited in the embodiments of the present application.

There are many possibilities for the specific implementation of the cooling mechanism 20, which is not limited in the embodiments of the present invention. For example, the cooling mechanism 20 may be a radiator with a structure similar to a fan or the like, or the cooling mechanism 20 may also be a heat exchange structure for cooling by conveying a cooling medium or the like.

In the embodiments of the present invention, the cooling mechanism 20 is arranged on the side wall of the laser welding head 10. In the process of welding using the laser welding head 10, the cooling mechanism 20 can cool the laser welding head 10, thereby reducing the risk of high-temperature deformation of the laser welding head 10 due to too high temperature, and improving the laser welding effect and the service life of the welding device.

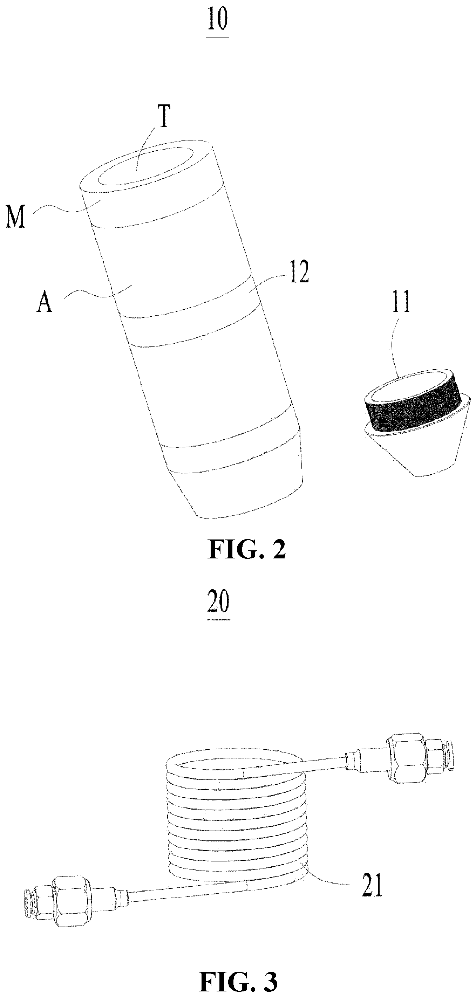

According to to Figs. 1 and 2, the laser welding head 10 comprises a nozzle 11 and a connecting pipe 12 connected to the nozzle 11, and the cooling mechanism 20 is sleeved on the outer periphery of the connecting pipe 12.

The nozzle 11 and the connecting pipe 12 are fixedly connected, comprising but not limited to by threaded connection and welding. Here, the nozzle 11 and the connecting pipe 12 may be made of the same material, or the nozzle 11 and the connecting pipe 12 may be made of different materials, which is not limited in the embodiments of the present application.

The nozzle 11 and the connecting pipe 12 are both hollow structures, and the space existing in them together constitutes a channel T through which laser passes. The connecting pipe 12 may have a hollow tubular structure, which may be a square pipe or a circular pipe. The nozzle 11 can have a hollow cone structure, which can be a circular cone, a triangular cone, a quadrangular cone and other structures.

In general, the nozzle 11 is small in size relative to the connecting pipe 12. If the cooling mechanism 20 is arranged at the nozzle 11, the problem of poor fitting between the cooling mechanism 20 and the laser welding head 10 will easily occur, leading to the separation of the cooling mechanism 20 from the laser welding head 10 easily, which is not conducive to the cooling effect of the cooling mechanism 20 on the laser welding head 10.

On this basis, in the embodiments of the present invention, the cooling mechanism 20 is sleeved on the outer periphery of the connecting pipe 12, and the cooling mechanism 20 can be shaped into an annular structure by winding or the like, and then the annular structure is sleeved on the outer periphery of the connecting pipe 12. Among others, the cooling mechanism 20 can be in close contact with the connecting pipe 12 to fix the position between them, or the cooling mechanism 20 can be fixed to the connecting pipe 12 by other structures instead of being in contact with the outer peripheral side wall of the connecting pipe 12, which is not limited in the embodiments of the present invention.

In addition, the cross-sectional shape of the annular structure formed by the cooling mechanism 20 may be matched with the cross-sectional shape of the connecting pipe 12, or the cross-sectional shape of the annular structure may be different from the cross-sectional shape of the connecting pipe 12, which is not limited in the embodiments of the present application.

The cooling mechanism 20 is sleeved on the outer periphery of the connecting pipe 12, which can improve the reliability of the relative position between the laser welding head 10 and the cooling mechanism 20, and reduce the risk of separation of the cooling mechanism 20 from the laser welding head 10. Moreover, compared with arranging the cooling mechanism 20 on the nozzle 11, this design can also increase the size of the cooling mechanism 20 to a certain extent, thus improving the cooling effect on the laser welding head 10.

According to the present invention, and as shown in Figs. 1 and 2, the connecting pipe 12 comprises an outer wall surface M and an accommodating groove A formed by the inner wall surface M recessed inwards, and at least part of the cooling mechanism 20 is located in the accommodating groove A.

The outer wall surface M is the outer peripheral surface of the connecting pipe 12, and at least part of the outer wall surface M is recessed in the direction close to the channel T, thus forming an accommodating groove A for accommodating at least some of the structures in the cooling mechanism 20. Among others, there may be one or a plurality of accommodating grooves A. When there are a plurality of accommodating grooves A, the plurality of accommodating grooves A may be arranged at intervals in the extending direction of the channel T.

At least part of the cooling mechanism 20 is located in the accommodating groove A, wherein at least part of the cooling mechanism 20 can be completely located in the accommodating groove A or can protrude from the accommodating groove A, which is not limited in the embodiments of the present application. The accommodating groove A plays a certain role in locking the cooling mechanism 20, reducing the risk of the cooling mechanism 20 moving relative to the laser welding head 10 and improving the reliability of the relative position between the cooling mechanism 20 and the laser welding head 10. Among others, the accommodating groove A can be cut out by a cutting process.

According to the present invention, the connecting pipe 12 is provided with an accommodating groove A, and at least part of the cooling mechanism 20 is arranged in the accommodating groove A. Compared with other ways, the design of the accommodating groove A plays a role in fixing the cooling mechanism 20 and the laser welding head 10 to a certain extent, and reduce the risk of relative displacement between them.

Further according to the present invention, the welding device further comprises a limiting assembly 30 disposed at a side of the cooling mechanism 20 away from the accommodating groove A, and the limiting assembly 30 is connected to the connecting pipe 12.

The limiting assembly 30 is connected to the connecting pipe 12 in ways comprising but not limited to welding and bolt connection. The limiting assembly 30 is mainly used to limit the position of the cooling mechanism 20. Specifically, the limiting assembly 30 is located on a side of the cooling mechanism 20 away from the accommodating groove A. Because the limiting assembly 30 is connected to the connecting pipe 12, the position of the limiting assembly 30 relative to the connecting pipe 12 remains fixed all the time. If the part of the cooling mechanism 20 located in the accommodating groove A is separated from the accommodating groove A, this part of structure will be in contact with the limiting assembly 30, and the limiting assembly 30 will prevent the cooling mechanism 20 from further moving away from the connecting pipe 12, so that the relative position between the cooling mechanism 20 and the connecting pipe 12 is within a preset range, thus ensuring that the cooling mechanism 20 can cool the laser welding head 10.

And, according to this aspect of the present invention, a plurality of limiting assemblies 30 are provided. Moreover, the structure of the limiting assembly 30 is also not limited in the embodiments of the present application. For example, the limiting assembly 30 has a strip-shaped structure, the length of the strip-shaped structure in the extending direction of the through hole is greater than the length of the accommodating groove A in the extending direction of the through hole, and both ends of the strip-shaped structure are respectively connected and fixed to the connecting pipe 12.

The position of the cooling mechanism 20 is limited by arranging the limiting assembly 30, so as to reduce the risk of separation of the cooling mechanism 20 from the laser welding head 10, ensure that the cooling mechanism 20 can always cool the laser welding head 10, and improve the reliability of the overall structure.

Thus, according to the present invention, there are a plurality of limiting assemblies 30, and the limiting assemblies 30 are arranged at intervals along the circumferential direction of the connecting pipe 12.

A plurality of limiting assemblies 30 are used for limiting the cooling mechanism 20, and the plurality of limiting assemblies 30 are arranged at intervals. Exemplarily, a plurality of limiting assemblies 30 are arranged at intervals around the circumferential side of the connecting pipe 12 at the same preset angle.

Thus, by arranging a plurality of limiting assemblies 30, the limiting effect of the limiting assemblies 30 on the cooling mechanism 20 is improved, thereby further reducing the risk of separation of the cooling mechanism 20 from the connecting pipe 12 and improving the reliability.

In some embodiments, the limiting assembly 30 and the accommodating groove A clamp the cooling mechanism 20.

"Clamping" mentioned in the embodiments means that the limiting assembly 30 and the accommodating groove A are in contact with the cooling mechanism 20 at the same time, that is, the space formed by the clamping of the limiting assembly 30 and the accommodating groove A is matched with the size of the cooling mechanism 20, and they jointly limit the position of the cooling mechanism 20.

Optionally, the depth of the accommodating groove A may be set to be the same as the size of the cooling mechanism 20, and the surface of the limiting assembly 30 facing the cooling mechanism 20 is flush with the outer wall surface M. Alternatively, the depth of the accommodating groove A can be set to be larger than the size of the cooling mechanism 20, and at this time, part of the surface of the limiting assembly 30 facing the cooling mechanism 20 penetrates into the inner wall of the accommodating groove A, so as to limit the position of the cooling mechanism 20.

The limiting assembly 30 and the accommodating groove A clamp the cooling mechanism 20, thereby reducing the risk of unnecessary shaking of the cooling mechanism 20 during the use of the welding device and improving the reliability of the relative position between the cooling mechanism 20 and the laser welding head 10.

In some embodiments, at least part of the cooling mechanism 20 protrudes from the accommodating groove A, and the at least part of the cooling mechanism 20 protruding from the accommodating groove A abuts against the limiting assembly 30.

At least part of the cooling mechanism 20 protrudes from the accommodating groove A, so that the cooling mechanism 20 can have a larger size, thereby achieving a better cooling effect on the laser welding head 10. On this basis, the existence of the limiting assembly 30 can prevent the cooling mechanism 20 from being separated from the laser welding head 10, and ensure that the cooling mechanism 20 will not shake relatively during the use of the welding device, thus improving the welding effect.

In some embodiments, the connecting pipe 12 and the nozzle 11 are made of thermally conductive materials.

As can be seen from the foregoing, since the nozzle 11 is small in size, the cooling mechanism 20 is arranged on the connecting pipe 12, so that the cooling mechanism 20 and the laser welding head 10 can be relatively fixed. On this basis, in order to ensure that the cooling mechanism 20 can cool the nozzle 11 at the same time, in the embodiments of the present application, the connecting pipe 12 and the nozzle 11 are made of thermally conductive materials, and the cooling effect of the cooling mechanism 20 on the connecting pipe 12 can be conducted to the nozzle 11, so that the nozzle 11 can be cooled at the same time, the temperature of the nozzle 11 can be reduced, the risk of deformation of the nozzle 11 due to too high temperatures can be reduced, and the use reliability of the welding device can be improved.

It should be noted that the specific composition of the thermally conductive material is not limited in the embodiments of the present application. The embodiments of the present application also do not limit the thermal conductivity of the thermally conductive material. Exemplarily, the thermally conductive material comprises a metal or alloy material.

In some embodiments, the thermal conductivity of the thermally conductive material is A, wherein 500 W/m•K ≥ A ≥ 200 W/m•K. Exemplarily, A is one of 200 W/m•K, 300 W/m•K, 400 W/m•K and 500 W/m•K.

The higher the thermal conductivity, the higher the thermal conductivity of the corresponding material, that is, the better the thermal conduction effect. In the embodiments of the present application, the thermal conductivity A of the thermally conductive material is set to be not less than 200 W/m•K, so that the cooling effect of the cooling mechanism 20 can be transmitted to the nozzle 11 in time, so as to realize the timely cooling of the nozzle 11 and improve the cooling effect of the cooling mechanism 20 on the nozzle 11. At the same time, if the thermal conductivity is too high, the temperature of the nozzle 11 and the connecting pipe 12 is prone to sharp increase during the working process of the welding device, which is not conducive to the long-term use of the welding device. Therefore, the embodiments of the present application further set the thermal conductivity A of the thermally conductive material to be not more than 500 W/m•K to ensure the long-term use of the welding device.

In some embodiments, the thermally conductive material comprises at least one of copper and aluminum.

Both copper and aluminum are metal materials with strong thermal conductivity. By arranging the connecting pipe 12 and the nozzle 11 comprising at least one of copper and aluminum, it can ensure that the cooling effect of the cooling mechanism 20 can be transmitted to the nozzle 11 in time, so as to realize the timely cooling of the nozzle 11. At the same time, compared with other materials, copper and aluminum are more common and cheaper, so the cost of the welding device can be reduced to a certain extent, which is conductive to large-scale production and use.

In some embodiments, referring to Figs. 1 to 3, the cooling mechanism 20 comprises a cooling pipe 21 for transporting a cooling medium.

The cooling pipe 21 has a tubular structure, and the cooling pipe 21 can be spirally wound around the side wall of the laser welding head 10. The cooling pipe 21 has an opposite inlet and outlet, and the cooling medium can enter the inside of the cooling pipe 21 through the inlet, then be transported along the internal path of the cooling pipe 21, and finally leave the cooling pipe 21 through the outlet. In this process, the cooling medium will take away part of the heat in the laser welding head 10, thus achieving the cooling effect on the laser welding head 10.

The specific material of the cooling medium is not limited in the embodiments of the present invention. Among others, the cooling medium can be a liquid working medium or a gaseous working medium. Optionally, the cooling medium is a gaseous working medium, so that even if the cooling pipe 21 is damaged, the leaked cooling medium will not have too much influence on the welding effect, thus ensuring the reliable welding process.

By arranging the spirally wound cooling pipe 21 outside the laser welding head 10 and conveying the cooling medium into the cooling pipe 21, part of the heat of the laser welding head 10 can be taken away, so as to realize the cooling effect. This structure is simple and reliable, which is conductive to production and manufacturing.

In some embodiments, there are a plurality of cooling pipes 21, and the plurality of cooling pipes 21 are arranged side by side in the extending direction of the connecting pipe 12.

The plurality of cooling pipes 21 may be arranged at intervals or adjacent to each other. Each cooling pipe 21 is provided with a corresponding inlet and outlet, and each cooling pipe 21 can transmit the same cooling medium or different cooling media. Optionally, the number of accommodating grooves A is the same as the number of cooling pipes 21, and the plurality of cooling pipes 21 are respectively arranged corresponding to different accommodating grooves A.

If the length of the cooling pipe 21 is too long, the moving path of the corresponding cooling medium will be too long, which will easily lead to too high temperature of the cooling medium near the outlet position of the cooling pipe 21, which will be detrimental to its cooling effect on the laser welding head 10.

Compared with the solution that only one cooling pipe 21 is provided, a plurality of cooling pipes 21 are provided, so that the extension length of a single cooling pipe 21 can be reduced, that is, the moving path of the cooling medium can be reduced, thereby improving the cooling effect of the cooling medium on the laser welding head 10.

In some embodiments, as shown in Figs. 1 to 3, the cooling pipe 21 is fitted to and spirally wound around the connecting pipe 12.

When the cooling pipe 21 is fitted to and wound around the connecting pipe 12, it shows that the shape and size of the annular structure formed by winding the cooling pipe 21 are matched with the shape and size of the outer peripheral side wall of the laser welding head 10. In this way, physical contact between the cooling pipe 21 and the laser welding head 10 can be realized, and the cooling effect of the cooling mechanism 20 on the laser welding head 10 can be improved through physical contact, thereby further reducing the risk of deformation of the laser welding head 10 due to high temperature.

In some embodiments, the welding device further comprises a bonding member (not shown), and the bonding member is sandwiched between the cooling pipe 21 and the connecting pipe 12 to fix the cooling pipe 21 and the connecting pipe 12.

The bonding member is sandwiched between the cooling pipe 21 and the connecting pipe 12, and the bonding member bonds and fixes the cooling pipe 21 and the connecting pipe 12. The existence of the bonding member improves the connection reliability between the cooling pipe 21 and the connecting pipe 12, thereby reducing the risk of relative displacement between them and improving the reliability of the welding device.

In some embodiments, the bonding member comprises a thermally conductive adhesive.

the bonding member not only improves the positional reliability between the cooling pipe 21 and the connecting pipe 12, but also plays a role of heat conduction, thus helping the cooling mechanism 20 to better cool the laser welding head 10 and improve the cooling effect.

Referring to Figs. 1 to 3, a welding device comprises a laser welding head 10, a cooling mechanism 20 and a limiting assembly 30. The laser welding head 10 is provided with a channel T for laser to pass through, and the laser welding head 10 comprises a nozzle 11 and a connecting pipe 12 connected to the nozzle 11. The connecting pipe 12 comprises an outer wall surface M and an accommodating groove A formed by the outer wall surface M recessed inwards. The cooling mechanism 20 comprises a cooling pipe 21, and at least part of the cooling pipe 21 protrudes from at least part of the accommodating groove A. The limiting assembly 30 is located on a side of the cooling mechanism 20 away from the accommodating groove A and clamps the cooling mechanism 20 together with the accommodating groove A.

Finally, it should be noted that the above embodiments are only used to illustrate rather than limit the technical solutions of the present invention as defined by the scope of the appended claims.

## Claims

1. A welding device, comprising:
a laser welding head (10), provided with a channel for laser to pass through;
a cooling mechanism (20), arranged on a side wall of the laser welding head (10) and used for cooling the laser welding head (10);
the laser welding head (10) comprises a nozzle (11) and a connecting pipe (12) connected to the nozzle (11) and the cooling mechanism (20) is sleeved on the outer periphery of the connecting pipe (12),
the welding device being **characterised by** the following:
a limiting assembly (30) arranged at a side of the cooling mechanism (20) away from the accommodating groove (A), wherein the limiting assembly (30) is connected to the connecting pipe (12);
wherein the connecting pipe (12) comprises an outer wall surface (M) and an accommodating groove (A) formed by the outer wall surface (M) recessed inwards, and at least part of the cooling mechanism (20) is located in the accommodating groove (A); and
wherein there are a plurality of limiting assemblies (30), and the plurality of limiting assemblies (30) are arranged at intervals along the circumferential direction of the connecting pipe (12).

2. The welding device according to claim 1, wherein the limiting assembly (30) and the accommodating groove (A) clamp the cooling mechanism (20).

3. The welding device according to claim 2, wherein at least part of the cooling mechanism (20) protrudes from the accommodating groove (A), and the at least part of the cooling mechanism (20) protruding from the accommodating groove (A) abuts against the limit assembly (30).

4. The welding device according to any one of claims 1 to 3, wherein the connecting pipe (12) and the nozzle (11) are made of thermally conductive materials.

5. The welding device according to claim 4, wherein the thermal conductivity of the thermally conductive material is A, wherein 500 W/m•K ≥ A ≥ 200 W/m•K.

6. The welding device according to claim 4 or 5, wherein the thermally conductive material comprises at least one of copper and aluminum.

7. The welding device according to any one of claims 1 to 6, wherein the cooling mechanism (20) comprises a cooling pipe (21) for transporting a cooling medium.

8. The welding device according to claim 7, wherein there are a plurality of cooling pipes (21), which are arranged side by side in the extending direction of the connecting pipe (12).

9. The welding device according to claim 7 or 8, wherein the cooling pipe (21) is fitted to and spirally wound around the connecting pipe (12).

10. The welding device according to any one of claims 7 to 9, further comprising a bonding member sandwiched between the cooling pipe (21) and the connecting pipe (12) to fix the cooling pipe (21) and the connecting pipe (12).

11. The welding device according to claim 10, wherein the bonding member comprises a thermally conductive adhesive.

## Patentansprüche

1. Schweißvorrichtung, die Folgendes umfasst:
einen Laserschweißkopf (10), der mit einem Kanal versehen ist, durch den Laser geleitet wird,
einen Kühlmechanismus (20), der an einer Seitenwand des Laserschweißkopfes (10) angeordnet ist und zum Kühlen des Laserschweißkopfes (10) dient,
wobei der Laserschweißkopf (10) eine Düse (11) und ein mit der Düse (11) verbundenes Verbindungsrohr (12) umfasst und der Kühlmechanismus (20) auf den Außenumfang des Verbindungsrohrs (12) gesteckt ist,
wobei die Schweißvorrichtung durch Folgendes gekennzeichnet ist:
eine Begrenzungsbaugruppe (30), die auf einer von der Aufnahmenut (A) weg weisenden Seite des Kühlmechanismus (20) angeordnet ist, wobei die Begrenzungsbaugruppe (30) mit dem Verbindungsrohr (12) verbunden ist,
wobei das Verbindungsrohr (12) eine Außenwandfläche (M) und eine Aufnahmenut (A) umfasst, die durch Aussparen der Außenwandfläche (M) nach innen hin gebildet ist, und sich zumindest ein Teil des Kühlmechanismus (20) in der Aufnahmenut (A) befindet, und
wobei es mehrere Begrenzungsbaugruppen (30) gibt und die mehreren Begrenzungsbaugruppen (30) in Abständen in Umfangsrichtung des Verbindungsrohrs (12) angeordnet sind.

2. Schweißvorrichtung nach Anspruch 1, wobei die Begrenzungsbaugruppe (30) und die Aufnahmenut (A) den Kühlmechanismus (20) halten.

3. Schweißvorrichtung nach Anspruch 2, wobei zumindest ein Teil des Kühlmechanismus (20) aus der Aufnahmenut (A) vorsteht und zumindest der Teil des aus der Aufnahmenut (A) vorstehenden Kühlmechanismus (20) an der Begrenzungsbaugruppe (30) anliegt.

4. Schweißvorrichtung nach einem der Ansprüche 1 bis 3, wobei das Verbindungsrohr (12) und die Düse (11) aus wärmeleitendem Material hergestellt sind.

5. Schweißvorrichtung nach Anspruch 4, wobei die Wärmeleitfähigkeit des wärmeleitenden Materials A ist, wobei 500 W/m•K ≥ A ≥ 200 W/m•K.

6. Schweißvorrichtung nach Anspruch 4 oder 5, wobei das wärmeleitende Material Kupfer oder/und Aluminium umfasst.

7. Schweißvorrichtung nach einem der Ansprüche 1 bis 6, wobei der Kühlmechanismus (20) ein Kühlrohr (21) zum Transportieren eines Kühlmittels umfasst.

8. Schweißvorrichtung nach Anspruch 7, wobei es mehrere Kühlrohre (21) gibt, die in Erstreckungsrichtung des Verbindungsrohrs (12) nebeneinander angeordnet sind.

9. Schweißvorrichtung nach Anspruch 7 oder 8, wobei das Kühlrohr (21) in das Verbindungsrohr (12) eingebaut und spiralförmig um dieses herumgewickelt ist.

10. Schweißvorrichtung nach einem der Ansprüche 7 bis 9, die ferner ein Haftelement umfasst, das zwischen dem Kühlrohr (21) und dem Verbindungsrohr (12) liegt und so das Kühlrohr (21) und das Verbindungsrohr (12) fixiert.

11. Schweißvorrichtung nach Anspruch 10, wobei das Haftelement einen Wärmeleitkleber umfasst.

## Revendications

1. Dispositif de soudage comportant :
une tête de soudage au laser (10), dotée d'un canal pour le passage du laser ;
un mécanisme de refroidissement (20), agencé sur une paroi latérale de la tête de soudage au laser (10) et utilisé pour refroidir la tête de soudage au laser (10) ;
la tête de soudage au laser (10) comporte une buse (11) et un tuyau de raccordement (12) relié à la buse (11), et le mécanisme de refroidissement (20) est emmanché sur la périphérie extérieure du tuyau de raccordement (12) ;
le dispositif de soudage étant **caractérisé par** :
un ensemble de limitation (30) agencé sur un côté du mécanisme de refroidissement (20) à distance de la rainure de réception (A), dans lequel l'ensemble de limitation (30) est relié au tuyau de raccordement (12) ;
dans lequel le tuyau de raccordement (12) comporte une surface de paroi extérieure (M) et une rainure de réception (A) formée par la surface de paroi extérieure (M) évidée vers l'intérieur, et au moins une partie du mécanisme de refroidissement (20) est située dans la rainure de réception (A) ; et
dans lequel il y a une pluralité d'ensembles de limitation (30), et les ensembles de la pluralité d'ensembles de limitation (30) sont agencés selon des intervalles le long de la direction circonférentielle du tuyau de raccordement (12).

2. Dispositif de soudage selon la revendication 1, dans lequel l'ensemble de limitation (30) et la rainure de réception (A) serrent le mécanisme de refroidissement (20).

3. Dispositif de soudage selon la revendication 2, dans lequel au moins une partie du mécanisme de refroidissement (20) fait saillie depuis la rainure de réception (A), et ladite au moins une partie du mécanisme de refroidissement (20) faisant saillie depuis la rainure de réception (A) vient buter contre l'ensemble de limitation (30).

4. Dispositif de soudage selon l'une quelconque des revendications 1 à 3, dans lequel le tuyau de raccordement (12) et la buse (11) sont réalisés à partir de matériaux thermiquement conducteurs.

5. Dispositif de soudage selon la revendication 4, dans lequel la conductivité thermique du matériau thermiquement conducteur est A, dans lequel 500 W/m•K ≥ A≥ 200 W/m•K.

6. Dispositif de soudage selon la revendication 4 ou la revendication 5, dans lequel le matériau thermiquement conducteur comporte au moins l'un parmi le cuivre et l'aluminium.

7. Dispositif de soudage selon l'une quelconque des revendications 1 à 6, dans lequel le mécanisme de refroidissement (20) comporte un tuyau de refroidissement (21) pour transporter un agent de refroidissement.

8. Dispositif de soudage selon la revendication 7, dans lequel il y a une pluralité de tuyaux de refroidissement (21) qui sont agencés côte à côte dans la direction allant dans le sens de l'extension du tuyau de raccordement (12).

9. Dispositif de soudage selon la revendication 7 ou la revendication 8, dans lequel le tuyau de refroidissement (21) est monté sur le tuyau de raccordement (12) et enroulé en spirale autour de celui-ci.

10. Dispositif de soudage selon l'une quelconque des revendications 7 à 9, comportant par ailleurs un élément de liaison pris en sandwich entre le tuyau de refroidissement (21) et le tuyau de raccordement (12) pour fixer le tuyau de refroidissement (21) et le tuyau de raccordement (12).

11. Dispositif de soudage selon la revendication 10, dans lequel l'élément de liaison comporte un adhésif thermiquement conducteur.
